**Europäisches Patentamt**

**European Patent Office**

**Office européen des brevets**

(11) Veröffentlichungsnummer: **0 378 778**

**A1**

(12) ## EUROPÄISCHE PATENTANMELDUNG

(21) Anmeldenummer: **89121290.4**

(51) Int. Cl.5: **B65G  47/57**

(22) Anmeldetag: **17.11.89**

(30) Priorität: **17.01.89 DE 3901201**

(43) Veröffentlichungstag der Anmeldung:
**25.07.90 Patentblatt  90/30**

(84) Benannte Vertragsstaaten:
**AT BE CH DE ES FR GB IT LI NL SE**

(71) Anmelder: **EXPERT Maschinenbau GmbH**
**Seehofstrasse 56-58**
**D-6143 Lorsch(DE)**

(72) Erfinder: **Popp, Heinrich, Dipl.-Ing.**
**Am Wingertsberg 32**
**D-6143 Lorsch(DE)**

(74) Vertreter: **Helber, Friedrich G., Dipl.-Ing. et al**
**Giesser Weg 47**
**D-6144 Zwingenberg(DE)**

(54) **Ketten-Speichervorrichtung.**

(57) Speichervorrichtung mit einer Vielzahl von tablettartigen Werkstückträgern (40), die aufeinanderfolgend zwischen zwei umlaufenden endlosen Speicherketten (28) gehaltert sind, welche in parallelem seitlichem Abstand schlaufenförmig einerseits über ortsfest in einem Gestell gelagerte und zumindest teilweise motorisch antreibbare und andererseits an wenigstens einem verschieblich im Gestell geführten Führungswagen gelagerte Umlenkrollen geführt sind. Die Werkstückträger (40) werden bei angetriebenen Speicherketten (28) von einer Werkstückeinzu einer Werkstückaustragestation und zurück geführt in denen von einem Beschickungsförderer (z. B. 30) zugeführte Werkstücke auf die Werkstückträger (40) übergeben bzw. von den Werkstückträgern auf einen Abführförderer ausgetragen werden.

Die Förderorgane (36) des Beschickungs- und/oder des Abführförderers (30; 32) im Bereich der Werkstückein-bzw. -austragestation sind soweit in den Transportweg der Werkstückträger (40) geführt, daß sich die Werkstückträger und die Forderorgane (36) teilweise überlappen. Die Werkstückträger (40) weisen in den sich überlappenden Bereichen in dem jeweiligen Förderer (30; 32) zugewandten Rand offen mündende Ausschnitte (40; 44) auf, in welche die Förderorgane (36) eingreifen.

Fig. 2

## Ketten-Speichervorrichtung

Die Erfindung betrifft eine Speichervorrichtung mit einer Vielzahl von tablettartigen Werkstückträgern, die aufeinanderfolgend zwischen zwei umlaufenden endlosen Speicherketten gehaltert sind, welche in parallelem seitlichem Abstand schlaufenförmig einerseits über ortsfest in einem Gestell gelagerte und zumindest teilweise motorisch antreibbare und andererseits an wenigstens einem verschieblich im Gestell geführten Führungswagen gelagerte Umlenkrollen geführt sind, wobei die Werkstückträger bei angetriebenen Speicherketten von einer Werkstückein- zu einer Werkstückaustragestation und wieder zurück geführt werden, in denen von einem Beschickungsförderer zugeführte Werkstücke auf die Werkstückträger übergeben bzw. von den Werkstückträgern auf einen Abführförderer ausgetragen werden.

Speichervorrichtungen dieser Art (DE-PS 31 48 473; DE-PS 12 55 574) werden beispielsweise bei der Massenfertigung von Werkstücken zwischen zwei Bearbeitungsstationen mit nicht synchronisierten, schwankenden Bearbeitungsgeschwindigkeiten vorgesehen, um einem Pufferspeicher für von der vorausgehenden Arbeitsstation im Übermaß bearbeiteten Werkstücke und/oder einen Vorratsspeicher für den Fall zu bilden, daß die erste Arbeitsstation zeitweise eine geringere Menge von Werkstücken liefert, als in der ihr folgenden Bearbeitungsstation. Zur Aufnahme der Werkstücke innerhalb der Speichervorrichtung sind zwischen den parallelen Speicherketten Werkstückträger vorgesehen, die beispielsweise die Form von an ihren äußeren Stirnseiten pendelnd an den Speicherketten aufgehängten und - erforderlichenfalls -durch zusätzliche Führungen am Gestell ständig in die horizontale Lage ausgerichtet gehaltene Trägerplatten haben, auf welche die Werkstücke nach Verlassen der einen Arbeitsstation durch einen Beschickungsförderer überführt, und von denen sie nach Durchlaufen der Speichervorrichtung auf einen zur folgenden Arbeitsstation führenden Abführförderer ausgetragen werden. Solche Beschickungs- bzw. Abführför derer können beispielsweise Bandförderer mit einer Anzahl von parallelen, über Trag- und Umlenkrollen geführten umlaufenden Tragbändern oder aber auch sogenannte Förderbalken- oder Shuttleförderer mit wenigstens zwei in seitlichem Abstand parallel zueinander angeordneten und abwechselnd in einer angehobenen Stellung periodische Förderhübe in Förderrichtung und in einer abgesenkten Stellung periodische Rückhübe ausführenden Förderbalken sein. Aber auch andere Förderer, wie Röllchenbahnen u.dgl. können zur Beschickung der Speichervorrichtung mit bzw. zur Entnahme von Werkstücken aus der Speichervorrichtung verwendet werden, wobei größere Werkstücke direkt, kleinere Werkstücke aber zu mehreren, auf einem Tablett bzw. einer Palette gesammelt, in die Speichervorrichtung überführt bzw. aus ihr ausgetragen werden. Kritisch kann die Übergabe der Werkstücke vom Beschickungsförderer auf die Werkstückträger und eventuell auch das Austragen aus der Speichervorrichtung sein, wenn es sich um empfindliche, z.B. weiche, nicht formstabile Werkstücke handelt, die möglichst stoß- und erschütterungsfrei auf den Werkstückträgern aufgesetzt bzw. von ihnen abgenommen werden müssen. Mechanisch betätigte Schiebar und ähnliche Hilfsmittel, mit denen die Werkstücke schnell vom Förderer auf die Werkstückträger und gegebenenfalls von den Werkstückträgern auf den Förderer überführt werden, sind dann nicht zulässig.

Der Erfindung liegt die Aufgabe zugrunde, die bekannten Ketten-Speichervorrichtungen so weiterzubilden, daß eine einfache und schnelle, auch empfindliche Werkstücke nicht schädigende Übergabe von Werkstücken vom Beschickungsförderer auf die Werkstückträger der Speichervorrichtung und/oder von den Werkstückträgern auf den Abführförderer möglich wird.

Ausgehend von einer Speichervorrichtung der eingangs erwähnten Art wird diese Aufgabe erfindungsgemäß dadurch gelöst, daß die Förderorgane des Beschickungs- und/oder des Abführförderers im Bereich der Werkstückein- bzw. austragestation soweit in den Transportweg der Werkstückträger geführt sind, daß sich die Werkstückträger und die Förderorgane teilweise überlappen, und daß die Werkstückträgerin den sich überlappenden Bereichen in dem jeweiligen Förderer zugewandten Rand offen mündende Ausschnitte aufweisen, in welche die Förderorgane eingreifen. Durch die Anbringung von Ausschnitten in den tablettartigen Werkstückträgern, in welche die speichervorrichtungsseitigen Enden der Förderorgane des Beschickungs- bzw. des Abführförderers eingreifen können, ist es möglich, die Werkstücke bzw. - gegebenenfalls - ein die Werkstücke halterndes Tablett bis in die Bewegungsbahn der Werkstückträger zu fördern und sie dann durch die Umlaufbewegung der Werkstückträger selbst von Förderer abzuheben bzw. auf ihm abzusetzen. Dadurch wird nicht nur der konstruktive Aufwand für die Ausgestaltung der Eingabe- und/oder Ausgabestation der Speichervorrichtung sehr einfach, sondern durch eine geeignete Steuerung der Geschwindigkeit der Speicherketten sowie der Förderorgane kann auch die angestrebte schonende, d.h. erschütterungsfreie, Übergabe sichergestellt werden. Bei unempfindlichen Werkstücken ist außerdem eine Übergabe bei relativ hohen Zuführ- bzw. Abführgeschwindigkeiten in die bzw. aus der Speichervorrichtung heraus möglich.

Wenn die Förderorgane des Beschickungs- und/oder des Abführförderers von wenigstens zwei in seitlichem parallelem Abstand über Umlenkrollen geführten umlaufenden schmalen Tragbändern oder -ketten gebildet werden, werden die Werkstückträger zweckmäßig in den seitlichen Abständen der Tragbänder entsprechenden Abständen mit Ausschnitten versehen, deren Breite etwas größer als die Breite des jeweils zugeordneten Tragbandes ist.

Eine solche Ausgestaltung ist auch dann möglich, wenn die Förderorgane des Beschickungs- und/oder des Abführförderers von wenigstens zwei mit parallelem Abstand angeordneten, in einer angehobenen Stellung periodische Förderhübe in Förderrichtung und in einer abgesenkten Stellung periodische Rückhübe ausführenden Förderbalken gebildet werden. Auch dann werden in den Werkstückträgern in den seitlichen Abständen der Förderbalken entsprechenden Abständen Ausschnitte vorgesehen, deren Breite etwas größer als die Breite des jeweils zugeordneten Förderbalkens ist.

Die Erfindung ist in der folgenden Beschreibung eines Ausführungsbeispiels in Verbindung mit der Zeichnung näher erläutert, und zwar zeigt:

Fig. 1 eine schematisch Seitenansicht einer Ketten-Speichervorrichtung der in Frage stehenden Ketten-Speichervorrichtung; und

Fig. 2 eine Draufsicht auf einen die Übergabestation des Beschickungsförderers durchlaufenden, in der erfindungsgemäßen Weise ausgebildeten Werkstückträger der Speichervorrichtung, gesehen in Richtung des Pfeils 2 in Figur 1.

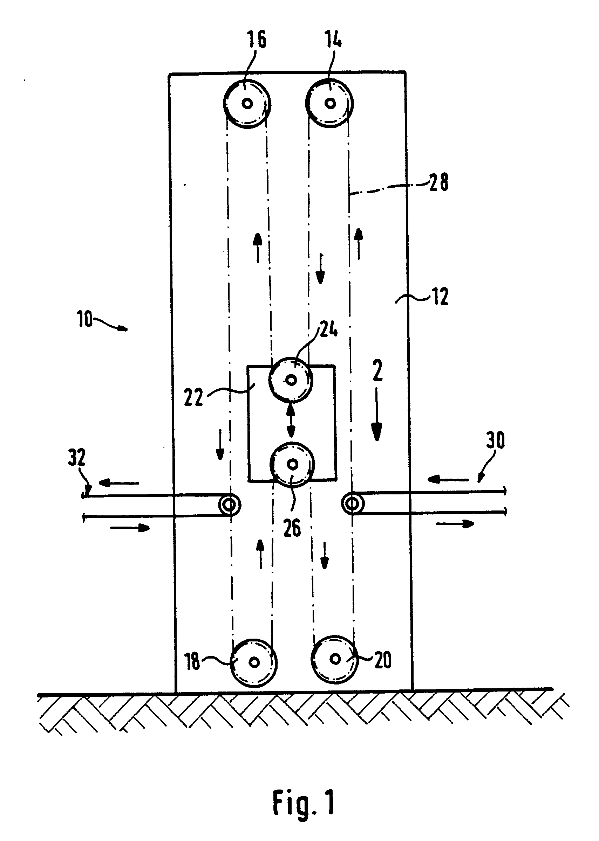

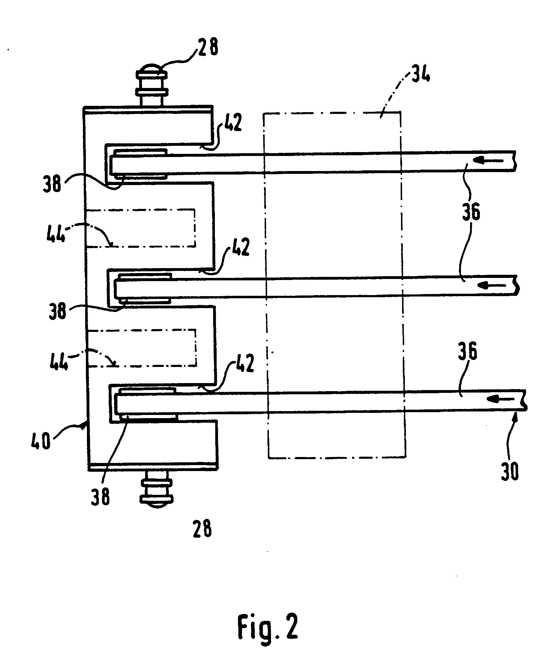

Figur 1 zeigt rein schematisch den grundsätzlichen Aufbau einer - in ihrer Gesamtheit mit 10 bezeichneten - Speichervorrichtung der hier in Frage stehenden Art in der Seitenansicht. In einem nur angedeuteten Gestell 12 sind im gezeigten Fall zwei obere und zwei untere Umlenkrollen 14, 16 und 18, 20 drehbar gelagert und wenigstens eine dieser Umlenkrollen ist durch einen nicht gezeigten motorischen Antrieb drehantreibbar. Über die Umlenkrollen 14 bis 18 sowie zwei weitere, an einem in senkrechter Richtung verschieblich innerhalb des Gestells 12 geführten Wagen 22 gelagerte Umlenkrollen 24, 26 ist eine strichpunktiert angedeutete endlose Kette 28 in der dargestellten Weise schlaufenförmig über die - zweckmäßig als Kettenräder ausgebildeten - Umlenkrollen geführt. Das beschriebene System von gestellfesten Umlenkrollen 14 bis 20, am senkrecht verschiebbaren Wagen 22 gelagerten Umlenkrollen 24, 26 und der über die Umlenkrollen geführten Kette 28 ist in eine parallel zu der Zeichnungsebene gemäß Figur 1 versetzte Ebene verdoppelt zu denken, so daß also eine Konfiguration von zwei parallelen und beabstandeten endlosen Ketten gleicher Konfiguration entsteht, zwischen denen Werkstückträger, beispielsweise in Form von jeweils mit ihren Enden verschwenkbar an Kettengliedern gleicher Flucht gelagerten Tablaren in regelmäßiger Teilung entlang der Ketten gehaltert sind. Ein solcher - in der erfindungsgemäßen Weise ausgebildeter - Werkstückträger wird nachstehend in Verbindung mit Figur 2 noch näher beschrieben.

Die Beschickung der Speichervorrichtung 10 mit Werkstücken möge über den in Figur 1 von rechts bis zwischen die beiden parallelen Ketten 28 in das Gestell 12 geführten, als Bandförderer ausgebildeten Beschickungsförderer 30 und die Entnahme der gespeicherten Werkstücke durch den auf der gegenüberliegenden Seite aus dem Gestell herausgeführten - ebenfalls als Bandförderer ausgebildeten - Abführförderer 32 erfolgen. Es ist ersichtlich, daß die Speicherkapazität der Speichervorrichtung 10 durch die Länge der vom Übergabeende des Beschickungsförderers 30 über die Umlenkrollen 14, 24, 16 zum Übernahmeende des Abführförderers 32 geführten Teilabschnitte der Ketten 28 abhängig ist und daß die Länge dieser Teilabschnitte durch Veränderung der Höhenlage des Wagens 22 veränderbar ist. Außerdem ist die Speicherkapazität durch Verlängerung der Ketten 28 vergrößerbar, was nicht nur durch eine entsprechende Vergrößerung des Gestells 12 in Höhenrichtung, sondern natürlich auch durch eine Vergrößerung des Gestells in horizontaler Richtung unter Bildung von weiteren Kettenschleifen durch zusätzliche gestellfeste Umlenkrollen und zusätzliche, an weiteren höhenverfahrbaren Wagen angeordnete Umlenkrollen verwirklichbar ist. Da Ketten-Speichervorrichtungen insoweit bekannt sind, ist eine nähere Beschreibung der Art und Weise des Antriebes der Ketten 28 über die Umlenkrollen und die Änderung der Höhenlage des - bzw. - gegebenenfalls -der Wagen 22 im einzelnen nicht erforderlich.

Ein Problem kann in bestimmten Fällen die beschädigungsfreie Übergabe der zu speichernden Werkstücke in die Speichervorrichtung und/oder das Austragen der Werkstücke aus der Speichervorrichtung sein, wenn die Werkstücke beispielsweise gegen Stöße oder Erschütterungen empfindlich sind, d.h. nicht einfach auf die tablarartigen Werkstückträger der Speichervorrichtung abgeworfen oder durch mechanische Hilfsmittel, wie steuerbare Anschläge und Schieber auf die Werkstückträger überführt bzw. aus den Werkstückträgern ausgetragen werden können. Als Beispiel sei hier nur die Produktion von Schokoloade, Pralinen u.dgl. angeführt, wenn die in fließfähigem warmen und deshalb noch verformungsfähigem Zustand befindlichen Schokoladetafeln oder Pralinen in der Speichervorrichtung zwischengespeichert (und abgekühlt) werden sollen, bevor sie in einer weiteren Bearbeitungsstation zusätzlich dekoriert oder auch verpackt werden. Die zu speichernden Schokoladetafeln oder Pralinen mögen auf Tabletts 34 abgelegt sein, von denen in Figur 2 ein Tablett strichpunktiert auf drei schmalen parallelen umlaufenden Bändern 36 des Beschickungsförderers 30 aufruhend dargestellt ist. Die Bänder 30 sind jeweils über Umlenkrollen 38 geführt, welche im Bereich zwischen den Ketten 28 der Speichervorrictung gelagert sind. Damit die zwischen den Ketten 28 angeordneten tablettartigen Werkstückträger 40 einerseits die Tabletts 34 übernehmen können und andererseits aber bei der Aufwärtsbewegung in den Speicherbereich der Speichervorrictung 10 nicht mit den gestellseitigen Umlenkrollen und den über diese geführten Endbereiche der Bänder 36 kollidieren, sind die Werkstückträger 40 in den sich mit den gestellseitigen Enden der über die Umlenkrollen 38 geführten Enden der Bänder 36 überlappenden Längsseiten mit offen mündenden Ausschnitten 42 versehen, die so bemessen sind, daß die Werkstückträger ohne Kollision mit Teilen des Bandförderers 30 in Aufwärtsrichtung durch das Ende des Bandförderers 30 hindurchtreten können und dabei dann jeweils ein bis in eine zum Werkstückträger 40 ausgerichtete Endstellung geführtes, mit Werkstücken besetztes Tablett 34 mitnehmen. Die Werkstückträger 40 haben dann also die in Figur 2 erkennbare einseitig mit den Ausschnitten versehene kammartige Ausgestaltung.

Wenn das Auftragen der Tabletts 34 und die Weiterführung auf dem Abführförderer 32 analog der Beschickung der Speichervorrichtung 10 erfolgen soll, d.h. wenn der Abführförderer 32 ebenfalls bis zwischen die Ketten 28 geführt ist, sind zusätzliche Ausschnitte 44 in zu den Ausschnitten 42 versetzter Lage anzubringen. Solche zusätzlichen Ausschnitte 44 sind in Figur 2 nur strichpunktiert dargestellt, da in diesem Fall- abweichend von der Darstellung gemäß Figur 1 - hier davon ausgegangen wird, daß die Schokoladetafeln oder Pralinen während des Durchlaufens der Speichervorrichtng 10 soweit abgekühlt sind, daß sie bei Erreichen der Austragestelle hinreichend formstabil sind, um in üblicher Weise durch mechanische Schieber o.dgl. auf den - dann nicht bis zwischen die Ketten 28 geführten - Abführförderer 32 überführt zu werden. Grundsätzlich ist aber die Austragung der Tabletts 34 aus dem Abführförderer 32 analog zum Eintragen der Tabletts 34 in die Speichervorrichtung und zum Absetzen auf den Werkstückträgern 40 möglich, wenn die erwähnten Ausschnitte 44 in den Werkstückträgern vorgesehen sind, wobei dann natürlich die gestellseitigen Umlenkrollen und Enden der Bänder des Abführförderers 32 in eine zu den Ausschnitten 44 fluchtende Lage versetzt angeordnet sein müssen. Anstelle der in der Draufsicht kammartigen Form der Werkstückträger entsteht dann ein Werkstückträger mit jeweils abwechselnd in gegenüberliegenden Stirnkanten offen mündenden, zueinander versetzten Ausschnitten, d.h. die Werkstückträger zeigen dann eine mäanderartige Draufsicht.

Es ist klar, daß die in der beschriebenen Weise ausgebildeten, mit Ausschnitten 42, 44 versehene Werkstückträger eine im Vergleich zu einem rechteckigen Tablett verringerte Biegesteifigkeit haben, was jedoch - erforderlichenfalls -durch Anbringung von versteifenden Profilen auf der Unterseite des Werkstückträgers ausgeglichen werden kann. Wenn die in der Speichervorrichtung 10 aufzunehmenden Werkstücke jedoch in der beschriebenen Weise auf Tabletts 34 aufgelagert sind, deren Breite quer zur Förderrichtung etwa der lichten Breite der Werkstückträger entspricht, ist die Biegesteifigkeit der Werkstückträger nicht kritisch, weil die Tabletts dann selbst beigesteif ausbildbar sind.

Es ist ersichtlich, daß im Rahmen des Erfindungsgedankens Abwandlungen und Weiterbildungen der in Verbindung mit Figur 2 beschriebenen Werkstückträger verwirklichbar sind, wobei diese Abwandlungen sowohl die Anzahl der ausgerichtet zu den Förderorganen des Beschickungsförderers 30 bzw. -gegebenenfalls - des Abführförderers 32 vorzusehenden Ausschnitte 42 bzw. 44, als auch die konstruktive Augestaltung der Werkstückträger 40 selbst betreffen können. Anstelle der beim Ausführungsbeispiel beschriebenen Bandförderern kann auch eine Anpassung der Werkstückträger an Förderer anderer Funktion, beispielsweise sogenannte Shuttle-Förderer erfolgen, wobei dann die Ausschnitte 42 bzw. 44 in Ausrichtung zu den freien Enden der eine überlagerte periodische Hub/Senk-und Oszillationsbewegung ausführenden Shuttle- oder Förderbalken vorgesehen werden.

## Ansprüche

1. Speichervorrichtung mit einer Vielzahl von tablettartigen Werkstückträgern, die aufeinanderfolgend zwischen zwei umlaufenden endlosen Speicherketten gehaltert sind, welche in parallelem seitlichem Abstand schlaufenförmig einerseits über ortsfest in einem Gestell gelagerte und zumindest teilweise motorisch antreibbare und andererseits an wenigstens einem verschieblich im Gestell geführten Führungswagen gelagerte Umlenkrollen geführt sind, wobei die Werkstückträger bei angetriebenen Speicherketten von einer Werkstückein- zu einer Werkstückaustragestation und wieder zurück geführt werden., in denen von einem Beschickungsförderer zugeführte Werkstücke auf die Werkstückträger übergeben bzw. von den Werkstückträgern auf einen Abführförderer ausgetragen werden,

**dadurch gekennzeichnet,**

daß die Förderorgane (36) des Beschickungs- und/oder des Abführförderers (30; 32) im Bereich der Werkstückein- bzw. austragestation soweit in den Transportweg der Werkstückträger (40) geführt sind, daß sich die Werkstückträger (40) und die Förderorgange (36) teilweise überlappen, un daß die Werkstückträger (40) in den sich überlappenden Bereichen in dem jeweiligen Förderer (30; 32) zugewandten Rand offen mündende Ausschnitte (40; 44) aufweisen, in welche die Förderorgane eingreifen.

2. Werktück-Speichervorrichtung nach Anspruch 1, bei welcher die Förderorgane des Beschickungs- und/oder des Abführförderers (30; 32) von wenigstens zwei in seitlich parallelem Abstand über Umlenkrollen (38) geführten, umlaufenden schmalen Tragbändern (36) oder -ketten gebildet werden, dadurch gekennzeichnet, daß die Werkstückträger (40) in den seitlichen Abständen der Tragbänder (36) entsprechenden Abständen mit Ausschnitten (42; 44) versehen sind, deren Breite etwas größer als die Breite des jeweils zugeordneten Tragbandes (36) ist.

3. Werkstück-Speichervorrichtung nach Anspruch 1, bei welcher die Förderogane des Beschickungs- und/oder des Abführförderers von wenigstens zwei in seitlich parallelem Abstand angeordneten, in einer angehobenen Stellung periodische Förderhübe in Förderrichtung und in einer abgesenkten Stellung periodische Rückhübe ausführenden Förderbalken gebildet werden, dadurch gekennzeichnet, daß die Werkstückträger (40) in den seitlichen Abständen der Förderbalken entsprechenden Abständen mit Ausschnitten (42; 44) versehen sind, deren Breite etwas größer als die Breite des jeweils zugeordneten Förderbalkens ist.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-C-3 148 473<br>(FRAUNHOFER-GESELLSCHAFT)<br>* Spalte 3, Zeilen 33-53; Figur 1 *<br>--- | 1,2,3 | B 65 G 47/57 |
| Y | US-A-2 722 197 (J. ROBERT)<br>* Figur 5 *<br>--- | 1,2 | |
| Y | GB-A- 432 700 (IGRANIC ELECTRIC CO.)<br>* Insgesamt *<br>--- | 1,3 | |
| A | US-A-4 465 177 (W.C. DORNER)<br>* Figur 2 *<br>----- | 1,2 | |

| | | RECHERCHIERTE SACHGEBIETE (Int. Cl.5) |
|---|---|---|
| | | B 65 G |

Der vorliegende Recherchenbericht wurde für alle Patentansprüche erstellt

| Recherchenort | Abschlußdatum der Recherche | Prüfer |
|---|---|---|
| DEN HAAG | 27-04-1990 | BEERNAERT J.E. |